# EUROPÄISCHE PATENTSCHRIFT

(11) **EP 3 186 522 B1**
(45) Veröffentlichungstag und Bekanntmachung des Hinweises auf die Patenterteilung: **18.09.2019**
(21) Anmeldenummer: 15784554.6
(22) Anmeldetag: 21.08.2015
(51) Int. Cl.: F16C 25/06, B62K 21/02, B62K 21/06, F16C 29/12

(54) **VORRICHTUNG ZUR EINSTELLUNG DES LAGERSPIELS KOAXIAL DREHBAR ZUEINANDER GELAGERTER BAUTEILE UND ANORDNUNG VON KOAXIAL DREHBAR ZUEINANDER GELAGERTEN BAUTEILEN**
DEVICE FOR ADJUSTING THE BEARING PLAY OF COMPONENTS THAT ARE MOUNTED SUCH THAT THEY CAN ROTATE COAXIALLY IN RELATION TO ONE ANOTHER, AND ASSEMBLY OF COMPONENTS THAT ARE MOUNTED SUCH THAT THEY CAN ROTATE COAXIALLY IN RELATION TO ONE ANOTHER
DISPOSITIF POUR LE RÉGLAGE DU JEU DANS LE PALIER DE PIÈCES LOGÉES DE MANIÈRE COAXIALE ET ROTATIVE LES UNES PAR RAPPORT AUX AUTRES ET AGENCEMENT DE PIÈCES LOGÉES DE MANIÈRE COAXIALE ET ROTATIVE LES UNES PAR RAPPORT AUX AUTRES

(30) Priorität: 26.08.2014 DE 102014012409
(43) Veröffentlichungstag der Anmeldung: 05.07.2017
(73) Patentinhaber: HWG Horst Weidner GmbH, 71272 Renningen (DE)
(72) Erfinder: BREITFELD,Sven, 71106 Magstadt (DE); WEIDNER, Frank, 70839 Gerlingen (DE)
(74) Vertreter: Patentanwälte Schuster, Müller & Partner mbB
(86) Internationale Anmeldenummer: PCT/DE2015/000418
(87) Internationale Veröffentlichungsnummer: WO 2016/029896

(56) Entgegenhaltungen:
- DE-A1- 19 940 969
- DE-A1-102005 022 808

## Beschreibung

### Stand der Technik

Die Erfindung geht aus von einer Vorrichtung zur Einstellung des Lagerspiels von koaxial drehbar zueinander gelagerten Bauteilen, beispielsweise Achsen in Radnaben oder Wellen in Gehäusen nach der Gattung des Oberbegriffs des Anspruchs 1 sowie einer Anordnung von koaxial drehbar zueinander gelagerten Bauteilen nach der Gattung des Oberbegriffs des Anspruchs 12.

Vorrichtungen zur Einstellung von Lagerspielen sind seit langem Stand der Technik. Dabei handelt es sich in der Regel um eine Einzelanstellung über den Vorspannweg. Mit Hilfe tolerierter Passscheiben, Zwischen- oder Abstandsringe kann die gewünschte Vorspannkraft eingestellt werden. Diese Spieleinstellung ist verhältnismäßig aufwändig, da zur Auswahl der geeigneten Passscheibe oder Ringe das Lagerspiel zuvor ausgemessen werden muss. Ohne ein Ausmessen des Lagerspiels ist nur ein Probieren mit unterschiedlichen Passscheiben oder Ringen möglich, was aber u. U. sehr zeitaufwändig ist, da zum Wechsel der Passscheiben oder Ringe das Bauteil samt Lager aus der Halterung oder dem Gehäuse, in der bzw. in dem es gelagert ist, herausgenommen werden muss.

Bekannt ist auch die Erzeugung der Anstellkraft auf direktem Weg, beispielsweise über eine gekonterte Stellmutter oder einen gekonterten Konus. Dabei wird die Stellmutter gegen den feststehenden Ring des Wälzlagers oder der Konus gegen die Wälzkörper gedrückt und in der Stellung mit einer Kontermutter arretiert. Hierzu sind immer zwei Werkzeuge erforderlich. Außerdem kann beim Anziehen der Kontermutter die Stellmutter oder der Konus wieder minimal aus seiner eingestellten Position herausgedreht werden, wodurch sich das Spiel wieder verändert, so dass sich ein Nachjustieren erforderlich macht. Nachteilig ist auch, dass zuerst immer das Lagerspiel eingestellt werden muss, bevor die Bauteile in dem Gehäuse, dem Gestell, der Gabel oder dem Rahmen befestigt werden. Umgekehrt ist zu Veränderung des Spiels immer zuvor das Lockern der Befestigung der Bauteile erforderlich.

Weitere Vorrichtungen zur Einstellung von Lagerspielen sind aus der DE 10 2005 022 808 und der DE 199 40 969 bekannt.

Der Erfindung liegt daher die Aufgabe zugrunde, eine Vorrichtung zur Einstellung des Lagerspiels von koaxial drehbar zueinander gelagerten Bauteilen zu entwickeln, bei der die Kraft zur Spieleinstellung im montierten Zustand der Bauteile auf einfache Weise aufgebracht und eingestellt werden kann.

### Die Erfindung und ihre Vorteile

Die erfindungsgemäße Vorrichtung zur Einstellung des axialen Lagerspiels von koaxial drehbar ineinander gelagerten Bauteilen mit den kennzeichnenden Merkmalen des Anspruchs 1 hat gegenüber dem beschriebenen Stand der Technik den Vorteil, dass sie die Aufbringung und Einstellung der zur Reduzierung des Lagerspiels bis hin zum Aufbringen einer Vorspannung auf die Lager aufzubringenden Kraft auf einfache Weise ermöglicht und eine einmal eingestellte Axialkraft auch sicher aufrecht erhält. Die Bedienung der Vorrichtung ist auf einfache Weise mit einem einzigen Werkzeug möglich. Von besonderem Vorteil ist, dass die Vorrichtung in eine komplett vormontierte Baugruppe, bestehend aus den koaxial drehbar ineinander gelagerten Bauteilen sowie deren Aufnahme, beispielsweise ein Gehäuse, ein Gestell, eine Fahrzeuggabel oder ein Fahrzeugrahmen, integrierbar ist, so dass die Spieleinstellung nicht nur in einem vormontierten Zustand, sondern bei funktionsbereiter, d. h. gebrauchsfertiger bzw. fahrbereiter Anordnung aller Bauteile möglich ist.

Das wird dadurch erreicht, dass die Vorrichtung aus zwei koaxial nebeneinander angeordneten, auch dann noch gegeneinander verdrehbaren Ringen besteht, wenn beide Ringe mit ihren äußeren Stirnflächen, mit dem durch das Gehäuse, das Gestell, den Rahmen oder die Gabel gebildeten Widerlager und die Stirnfläche des anderen Ringes mit einem Teil des Wälzlagers in Wirkverbindung stehen. Die einander zugewandten Stirnflächen der beiden Ringe weisen aus der Ebene dieser Stirnflächen herausragende Kontur auf, wobei mindestens eine der Konturen mit einer Steigung versehen ist, auf der bei Verdrehung des einen Ringes gegenüber dem anderen Ring die mindestens eine gegenüberliegende Kontur gleitet. Zur Verdrehung beider Ringe gegeneinander weisen beide geeignete Mittel auf. Der mit dem Wälzlager in Wirkverbindung stehende Ring wirkt auf die jeweils feststehende Komponente des Wälzlagers. Zur gegenseitigen radialen Verdrehung der beiden Ringe werden die dazu erforderlichen Mittel so gewählt, dass der eine Ring ein Widerlager und der andere Ring einen Stellmechanismus aufweist. Als Widerlager dient ein axial aus der Stirnfläche des einen Ringes herausragendes Anschlagelement. Dementsprechend ist der gegenüberliegende Ring mit dem Stellmechanismus versehen. Hierzu weist letztgenannter Ring eine Ausnehmung auf, in die das Anschlagelement des erstgenannten Ringes hineinragt. Die Ausnehmung ist in Umfangsrichtung des Ringes erweitert, und in diese Ausnehmung ragt ein Stellelement im Wesentlichen tangential bis leicht schräg hinein, das gegen das Anschlagelement des erstgenannten Ringes bewegbar und arretierbar ist.

Besonders vorteilhaft ist die Erfindung anwendbar bei der Spieleinstellung der Lager von Fahrradnaben. Die Spieleinstellung erfolgt an den bereits in die Gabel oder den Rahmen eingebauten und festgezogenen Rädern. Hier kommt auch der Vorteil, dass die Vorrichtung sehr klein, kompakt und leicht ist, zum Tragen, da sie auf der Achse zwischen einem Schenkel der Gabel oder des Rahmens und einem äußeren Wälzlager angeordnet ist und den Speichenflansch im Durchmesser nicht überragt.

Die Erfindung ist aber auch zur Einstellung von Lagerspielen an rotierenden Wellen, beispielsweise Spindeln von Werkzeugmaschinen, vorteilhaft einsetzbar.

Die Einstellvorrichtung des Lagerspiels kann an beliebiger Stelle zwischen dem Widerlager und einem der beiden Wälzlager positioniert werden. Dadurch ist eine gewisse konstruktive Freiheit bei der Lagergestaltung bzw. der Auslegung der kompletten Baugruppe gegeben. Vorteilhafterweise wird die Einstellvorrichtung an einer Stelle platziert, die in der montierten Baugruppe leicht zugänglich ist.

In einer vorteilhaften Ausgestaltung der Erfindung weist der mit dem Wälzlager in Wirkverbindung stehende Ring das axial aus seiner Stirnfläche herausragende Anschlagelement auf. Dementsprechend ist der gegenüberliegend mit dem Widerlager in Wirkverbindung stehende Ring mit dem Stellmechanismus versehen. Hierzu weist letztgenannter Ring die Ausnehmung auf, in die das Anschlagelement des mit dem Wälzlager in Wirkverbindung stehenden Ringes hineinragt. Die Ausnehmung ist in Umfangsrichtung des Ringes erweitert, und in diese Ausnehmung ragt das Stellelement im Wesentlichen tangential bis leicht schräg hinein, das gegen das Anschlagelement des erstgenannten Ringes bewegbar und arretierbar ist. Dadurch steht der mit dem Stellmechanismus ausgerüstete Ring weiter von dem Wälzlager ab, so dass er zur Einstellung des Lagerspiels leichter für ein Werkzeug zugänglich ist.

Nach einer diesbezüglich vorteilhaften Ausgestaltung der Erfindung ist das Anschlagelement ein Stift und das Stellelement eine Stellschraube, wodurch eine platzsparende und kompakte Bauweise erzielt wird.

Nach einer anderweitigen vorteilhaften Ausgestaltung der Erfindung besteht der das Stellelement aufnehmende Ring aus einem Polymerwerkstoff. Dadurch ist die Einstellvorrichtung insbesondere durch Spritzgießen kostengünstig herstellbar. Eine aus einem Polymerwerkstoff hergestellte Stellschraube lässt sich auf einfache Weise mit einem selbsthemmenden Gewinde ausbilden, wodurch eine zusätzliche Sicherung der Stellschraub entfallen kann.

Nach einer zusätzlichen vorteilhaften Ausgestaltung der Erfindung weist der mit dem Wälzlager in Wirkverbindung stehende Ring an dem Innenumfang seiner an dem Wälzlager anliegenden Stirnfläche eine Innendichtung und an dem Außenumfang dieser Stirnfläche eine Außendichtung auf. Dadurch wirkt dieser Ring gleichzeitig als Primärdichtung für das Wälzlager, wobei die Innendichtung am Innenring und die Außendichtung am Außenring des Wälzlagers anliegt und insgesamt eine sehr gute Lagerabdichtung gewährleistet wird. Die Dichtungen können dabei in den Ring eingelegt oder angespritzt sein. Bei Verwendung von Polymerwerkstoffen für den Ring ist das Anspritzen der Dichtung herstellungstechnisch besonders günstig.

Nach einer besonders vorteilhaften Ausgestaltung der Erfindung wirkt der mit dem Wälzlager in Wirkverbindung stehende Ring über einen axial verschiebbaren Konus auf einen konischen Innenring des Wälzlagers. Dadurch wirken die statische axiale Vorspannkraft sowie die dynamisch auftretenden Betriebskräfte zu einem sehr großen Anteil nicht in axialer sondern in radialer Richtung. Wie hoch der Anteil der verbleibenden axialen Belastung ist, hängt von den Winkeln der beiden aufeinander wirkenden Konen ab. Ab einem bestimmten Winkelverhältnis, das von der Haftreibungszahl der beiden Reibpartner abhängt, stellt sich der Effekt der Selbsthemmung ein, wodurch gar keine axiale Kraftkomponente mehr auf den Druckring trotz axialer Belastung des Innenrings wirkt. Dies stellt insofern einen Vorteil dar, als die Lagerspieleinstellvorrichtung je nach Ausführung und auftretenden Betriebskräften nur mit einem bestimmten Betrag an axialem Druck belastet werden kann. Wenn also je nach Auslegung keine oder nur sehr geringe Betriebskräfte auf die Lagerspieleinstellvorrichtung wirken, kann diese dadurch auch insgesamt kleiner dimensioniert werden. Besonders vorteilhaft ist diese Ausführung, wenn der Druckring aus Kunststoff gefertigt ist.

In einer anderweitigen vorteilhaften Ausgestaltung der Erfindung liegt der mit dem Wälzlager in Wirkverbindung stehende Ring direkt an den Kugeln des Wälzlagers an. Zu diesem Zweck weist die dem Wälzlager zugewandte Stirnseite des Ringes eine Laufrille für die Kugeln des Wälzlagers auf. Diese Ausführung bietet für Wälzlager ohne Innenring eine besonders einfache und daher kostengünstige Lagerspieleinstellung.

Weitere Vorteile und vorteilhafte Ausgestaltung der Erfindung sind der nachfolgenden Beschreibung, den Ansprüchen und den Zeichnungen entnehmbar.

### Zeichnung

Die erfindungsgemäße Vorrichtung zur Einstellung axialer Lagerspiele ist in den Zeichnungen am Beispiel der Vorder- und Hinterradnabe eines Fahrrades dargestellt und im Folgenden näher erläutert. Es zeigen
- Fig. 1: die Vorderradnabe eines Fahrrades in einem räumlichen Halbschnitt mit eingebauter erfindungsgemäßer Vorrichtung zur Einstellung axialer Lagerspiele,
- Fig. 2: die Hinterradnabe eines Fahrrades in einem räumlichen Halbschnitt mit eingebauter erfindungsgemäßer Vorrichtung zur Einstellung axialer Lagerspiele,
- Fig. 3: die Vorrichtung zur Einstellung axialer Lagerspiele in Explosionsdarstellung mit Blick auf den an dem Widerlager anliegenden Schraubring,
- Fig. 4: die Vorrichtung im Zusammenbau als räumlicher Halbschnitt und
- Fig. 5: die Vorrichtung in Explosionsdarstellung mit Blick auf den an dem Wälzlager anliegenden Druckring.

### Beschreibung der Ausführungsbeispiele

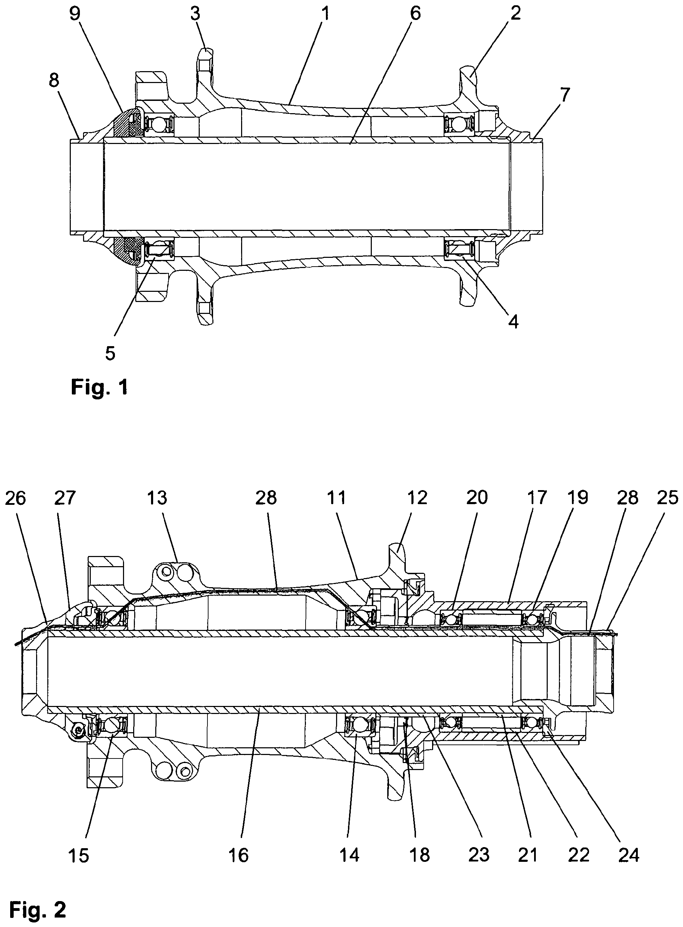

Fig. 1 zeigt eine Vorderradnabe eines Fahrrades, bestehend aus einem Nabenkörper 1 mit einem in Fahrtrichtung gesehen rechten und einem linken Speichenflansch 2, 3 und einer mittels eines rechten und eines linken Kugellagers 4, 5 in dem Nabenkörper 1 gelagerten Hohlachse 6. Das Kugellager 4 ist mit seinem Außenring im Bereich des rechten Speichenflansches 2, das linke Kugellager 5 mit seinem Außenring in einem axial über den linken Speichenflansch 3 hinausgeführten Bereich in den Nabenkörper 1 eingepresst, während die Hohlachse 6 über einen Schiebesitz mit dem Innenring jedes Kugellagers 4, 5 verbunden ist. Die Hohlachse 6 ist beiderseits mit einer Endkappe 7, 8 versehen, wobei die rechte Endkappe 7 auf die Hohlachse 6 aufgeschraubt, die linke Endkappe 8 auf die Hohlachse 6 aufgepresst oder aufgeklebt ist. Zwischen der linken Endkappe 8 und dem linken Kugellager 5 ist die erfindungsgemäße Vorrichtung zur Lagerspieleinstellung 9 auf die Hohlachse 6 aufgeschoben.

Fig. 2 zeigt eine Hinterradnabe eines Fahrrades, bestehend aus einem Nabenkörper 11 mit einem in Fahrtrichtung gesehen rechten und einem linken Speichenflansch 12, 13 und einer mittels eines rechten und eines linken Kugellagers 14, 15 in dem Nabenkörper 11 gelagerten Hohlachse 16. Das rechte Kugellager 14 ist mit seinem Außenring im Bereich des rechten Speichenflansches 12, das linke Kugellager 15 mit seinem Außenring in einem axial über den linken Speichenflansch 13 hinausgeführten Bereich in den Nabenkörper 11 eingepresst, während die Hohlachse 16 über einen Schiebesitz mit dem Innenring jedes Kugellagers 14, 15 verbunden ist.

Antriebsseitig, also an seiner rechten Seite, ist der Nabenkörper 11 in axialer Verlängerung in einer Richtung drehfest mit einem Freilaufkörper 17 verbunden, wobei zwischen ihren einander gegenüberstehenden Stirnflächen eine Zahnscheibe 18 angeordnet ist. Der Freilaufköper 17 ist über ein rechtes und ein linkes Freilaufkörperlager 19, 20 auf der Hohlachse 16 gelagert, wobei Letztere die beiden Innenringe auch hier in der Art eines Verschiebesitzes aufnimmt. Aus diesem Grunde sind die beiden Freilaufkörperlager 19, 20 untereinander durch eine innere und eine äußere Abstandshülse 21, 22 axial zueinander und über eine zwischen dem linken Freilaufkörperlager 20 und dem rechten Kugellager 14 des Nabenkörpers 11 durch eine weitere Abstandshülse 23 axial im Nabenkörper 11 gesichert. Das rechte Freilaufkörperlager 19 ist durch einen Klemmring 24 axial gesichert. Die Hohlachse 16 ist beiderseits mit einer rechten und einer linken Endkappe 25, 26 versehen, wobei auch hier die rechte Endkappe 25 auf die Hohlachse 16 aufgeschraubt, die linke aufgepresst oder aufgeklebt ist.

Auch bei der Hinterradachse ist die erfindungsgemäße Vorrichtung zur Lagerspieleinstellung 27 zwischen dem linken Kugellager 15 des Nabenkörpers 11 und der linken Endkappe 26 angeordnet. Der Kraftfluss zwischen den beiden Kugellagern 14, 15 ist in Fig. 2 als eine schwarze Freihandlinie dargestellt und mit der Bezugszahl 28 versehen. Es ist zu erkennen, dass es zur Funktion der Lagerspieleinstellung 27 der zwischen dem rechten Kugellager 14 und dem linken Freilaufkörperlager 20 angeordneten Abstandshülse 23 sowie der zwischen dem rechten und linken Freilaufkörperlager 19, 20 angeordneten inneren und äußeren Abstandshülsen 21, 22 bedarf, um die von der Lagerspieleinstellung 27 auf das linke Kugellager 15 ausgeübte Druckraft in die rechte Endkappe 25 einzuleiten, so dass auch das im rechten Kugellager 14 vorhandene Lagerspiel beseitigt wird.

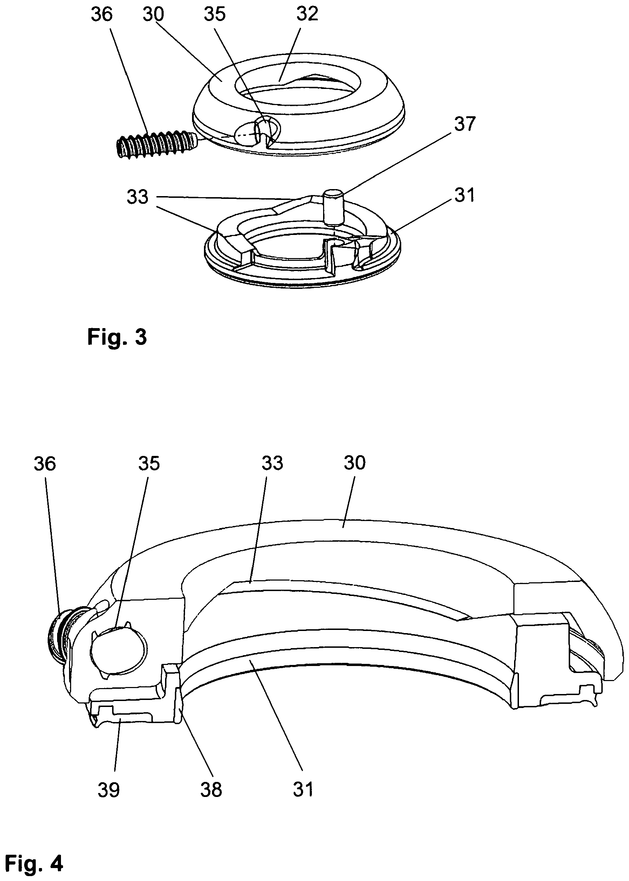

Da der Aufbau und die Funktionsweise der beiden Lagerspieleinstellungen 9, 27 gleich sind, werden sie anhand der Fig. 3 bis 5 gemeinsam beschrieben. Sie dienen der einfachen manuellen Einstellung des jeweils zwischen dem rechten und dem linken Kugellager 4, 5 der Vorderradnabe und dem rechten und linken Kugellager 14, 15 der Hinterradnabe fertigungs- und/oder montagebedingt bestehenden axialen Lagerspiels.

Wie aus den Fig. 3 bis 5 zu erkennen, bestehen die erfindungsgemäßen Lagerspieleinstellungen 9, 27 aus einem Schraubring 30 und einem Druckring 31, die koaxial zueinander angeordnet sind und einen Innendurchmesser aufweisen, der es erlaubt sie leicht auf die Hohlachsen 6 und 16 aufzuschieben. Ihre einander zugewandten Stirnflächen weisen jeweils zwei aus ihrer Ringfläche hervortretende keilförmige Erhebungen 32, 33 auf, wobei die zwei keilförmigen Erhebungen 33 des Druckrings 31 zu den komplementären keilförmigen Erhebungen 32 des Schraubringes 30 versetzt angeordnete sind, so dass die keilförmigen Erhebungen 32 des Schraubrings 30 von den komplementären Vertiefungen des Druckrings 31 aufgenommen werden und umgekehrt, die keilförmigen Erhebungen 33 des Druckrings 31 von den komplementären Vertiefungen des Schraubrings 30. In dieser Position besitzen die Lagerspieleinstellungen 9, 27 ihre geringste axiale Abmessung (Dicke), wie sie auch in den Fig. 1 und 2 in dem in die Vorderradnabe bzw. die Hinterradnabe eingebauten Zustand dargestellt sind. Bemerkenswert ist auch, dass der Schraubring 30 mit seiner Mantelfläche den Druckring 31 bis zu seiner äußeren Stirnseite vollständig umschließt, so dass bei einer Relativbewegung zwischen Schraubring 30 und Druckring 31 die dabei aufeinander gleitenden Flächen der keilförmigen Erhebungen 32, 33 vor Verschmutzung geschützt sind (Fig. 4).

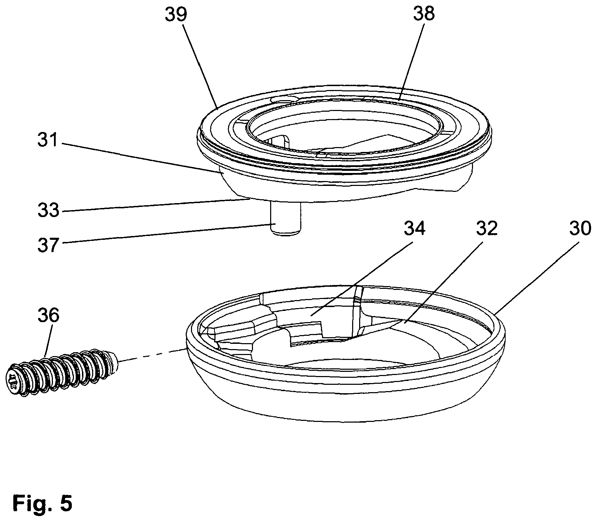

Wie aus Fig. 5 zu erkennen, ist der Ringraum des Schraubrings 30 mit einer sich bogenförmig erstreckenden Ausnehmung 34 versehen, in die eine tangential in vom Außenumfang des Schraubrings ausgehende Bohrung 35 mündet. In diese Bohrung 35 ist eine Stellschraube 36 einschraubbar. Besteht der Schraubring 30, wie im vorliegenden Beispiel aus einem Kunststoff, so braucht die Bohrung 35 nicht mit einem Gewinde versehen zu werden. Die Stellschraube 36 weist dann ein selbstschneidendes Gewinde auf, das zudem auch noch selbsthemmende ist, so dass sich die Stellschraube 36 nicht selbst lösen kann. Bei der Verwendung von härteren Werkstoffen für den Schraubring 30, beispielsweise Metallen oder Keramik, muss die Bohrung 35 jedoch als Gewindebohrung ausgebildet sein oder andere geeignete Stellmittel aufweisen, die einen axialen Hub in die Ausnehmung 34 hinein ermöglichen. Die Sicherung der Stellschraube 36 erfolgt in dem Fall durch an sich bekannte Mittel, beispielsweise ein selbsthemmendes Gewinde oder eine Kontermutter.

Aus den Fig. 3 und 5 ist ferner zu ersehen, dass der Druckring 31 einen sich aus der Stirnfläche in axialer Richtung erstreckenden Stift 37 aufweist, der im montierten Zustand von Druckring 31 und Schraubring 30 in dessen Ausnehmung 34 hineinragt.

Aus der in Fig. 5 dargestellten Ansicht der jeweils an dem linken Kugellager 5, 15 der Vorder- bzw. Hinterradnabe anliegenden Stirnseite des Druckrings 31 sowie dem in Fig. 4 gezeigten Halbschnitt der montierten Lagerspieleinstellungen 9, 27 ist eine am Innendurchmesser des Druckrings 31 angespritzte Innendichtung 38 zu erkennen, die im eingebauten Zustand der Lagerspieleinstellungen 9, 27 (Fig. 1 und 2) jeweils am Innenring der linken Kugellager 5, 15 anliegt. Eine in diese Stirnseite des Druckrings 31 sich zu dessen Außenumfang hin erstreckende angespritzte Lippendichtung 39 dichtet jeweils den Außenring der linken Kugellager 5, 15 ab. Beide Dichtungen 38, 39 halten bereits einen Großteil des von außen kommenden Schmutzes von dem linken Kugellager 5, 15 fern, so dass die Dichtung der Kugellager 5, 15 lediglich noch kleinere Schmutzpartikel von dem Lagerinneren fern zu halten brauchen.

Nachfolgend werden die Montage sowie die Funktion der erfindungsgemäßen Vorrichtung zur Einstellung axialer Lagerspiele näher beschrieben:
Wie aus den Fig. 1 und 2 erkennbar und oben bereits erwähnt, werden die Lagerspieleinstellungen 9, 27 jeweils zwischen einer linken Endkappe 8, 26 und dem auf der gleichen Seite befindlichen linken Kugellager 5, 15 so angeordnet, dass der Druckring 31 jeweils an dem Innenring der Kugellager 5, 15 anliegt. Bei Kugellagern ohne Innenring liegt der Druckring 31 unmittelbar an den Kugeln an. Zu diesem Zweck weist seine Stirnfläche eine Laufbahn, z. B. in Form eines Anlagekonus auf.

Selbstverständlich ist es auch möglich, die Lagerspieleinstellung 9 jeweils auf der rechten Seite der Naben anzuordnen, was jedoch bei Hinterradnaben aufgrund des begrenzten Bauraumes schwieriger ist als bei Vorderradnaben. In dem Fall ist die linke Endkappe 8 auf die Hohlachse 6 aufgeschraubt, während die rechte Endkappe 7 als Presssitz aufgebracht oder aufgeklebt ist. Die nachfolgende Beschreibung der Montage und Funktion bezieht sich jedoch nur auf die in den Ausführungsbeispielen gem. Fig. 1 und 2 dargestellte Anordnung auf der in Fahrtrichtung linken Seite.

Zuerst wird die linke Endkappe 8, 26 auf die Hohlachse 6, 16 aufgeklebt, danach wird die Lagerspieleinstellung 9, 27 aufgeschoben und die so vormontierte Baugruppe in den mit den Kugellagern 4, 5, 14, 15 komplettierten Nabenkörper 1, 11 eingeschoben. Abschließend wird die rechte Endkappe 7, 25 aufgeschraubt. Danach kann das so komplettierte Vorder- oder Hinterrad in die Gabel oder den Rahmen eingesetzt und mit Schnellspannern oder anderen bekannten Befestigungsmitteln in der Gabel oder dem Rahmen arretiert werden. Im so fertig eingebauten Zustand der Räder drücken die Schenkel der Fahrradgabel bzw. des Fahrradrahmens über die linke Endkappe 8, 26 auf den Schraubring 30, so dass diese Schenkel als Widerlager für den Schraubring 30 dienen. Abschließend wird lediglich noch die Stellschraube 36 am Schraubring 30 so weit in die Ausnehmung 34 hineingedreht, bis diese an dem Stift 37 des Druckrings anschlägt. Bei fortgesetztem Einschrauben der Stellschraube 36 bewegt sich der Druckring 31 um die Hohlachse 6, 16, wodurch die keilförmigen Erhebungen 32, 33 aufeinander gleiten und so den Druckring in axialer Richtung gegen den Innenring der linken Kugellager 5, 15 drücken. Dadurch wird das Kugellager 5, 15 axial belastet, und es stellt sich ein Kraftfluss zwischen der Laufbahn des Innenrings, den Kugeln und der Laufbahn des Außenrings ein.

In gleicher Weise werden die Kugeln des auf der rechten Seite befindlichen Kugellagers 4, 14 über den Kraftfluss durch den Nabenkörper 1, 11 hin zur fest mit der Hohlachse 6, 16 verschraubten rechten Endkappe 7, 25 gegen die Laufbahnen des Außenrings des rechten Kugellagers 4, 14 gedrückt, so dass das Spiel in jedem der Kugellager 4, 5, 14, 15 gegen Null geht. Bei fortgesetztem Drehen der Stellschraube 36 lässt sich innerhalb der Kugellager 4, 5, 14 15 eine definierte Vorspannung, auch als negatives Spiel bezeichnet, einstellen.

Die Anordnung des Schraubrings 30 und des Druckrings 31 kann auch ausgetauscht werden, d. h. die Stellschraube 36 befindet sich dann an dem am Kugellager 4, 5, 14, 15 anliegenden Ring, während der am Widerlager anliegende Ring den in die Ausnehmung 34 des Schraubrings 30 hineinragenden Stift 37 aufweist.

Alle hier dargestellten Merkmale können sowohl einzeln als auch in beliebiger Kombination miteinander erfindungswesentlich sein.

**Bezugszahlenliste**

| | | | |
|---|---|---|---|
| 1 | Nabenkörper Vorderrad | 30 | Schraubring |
| 2 | Rechter Speichenflansch | 31 | Druckring |
| 3 | Linker Speichenflansch | 32 | Keilförmige Erhebung Schraubring |
| 4 | Rechtes Kugellager | 33 | Keilförmige Erhebung Druckring |
| 5 | Linkes Kugellager | 34 | Ausnehmung |
| 6 | Hohlachse | 35 | Bohrung |
| 7 | rechte Endkappe | 36 | Stellschraube |
| 8 | linke Endkappe | 37 | Stift |
| 9 | Lagerspieleinstellung Vorderradnabe | 38 | Innendichtung |
| 10 | | 39 | Lippendichtung |
| 11 | Nabenkörper Hinterrad | | |
| 12 | Rechter Speichenflansch | | |
| 13 | Linker Speichenflansch | | |
| 14 | Rechtes Kugellager | | |
| 15 | Linkes Kugellager | | |
| 16 | Hohlachse | | |
| 17 | Freilaufkörper | | |
| 18 | Zahnscheibe | | |
| 19 | Rechtes Freilaufkörperlager | | |
| 20 | Linkes Freilaufkörperlager | | |
| 21 | Innere Abstandshülse | | |
| 22 | Äußere Abstandshülse | | |
| 23 | Abstandshülse | | |
| 24 | Klemmring | | |
| 25 | Rechte Endkappe | | |
| 26 | Linke Endkappe | | |
| 27 | Lagerspieleinstellung Hinterradnabe | | |
| 28 | Kraftflusslinie | | |
| 29 | | | |

## Patentansprüche

1. Vorrichtung zur Einstellung des Lagerspiels von koaxial drehbar zueinander gelagerten Bauteilen, die über zwei mit axialem Abstand zueinander angeordneten Wälzlagern (4, 5, 14, 15) drehbar miteinander verbunden sind, wobei ein Bauteil von einer Aufnahme, beispielsweise einem Gehäuse, Gestell, Fahrzeugrahmen oder einer Fahrzeuggabel aufgenommen wird und wobei die Vorrichtung mit einer Stirnseite koaxial mit einem der beiden Wälzlager (5, 15) in Wirkverbindung steht und einen axialen Druck auf eines der Wälzlager (4, 5, 14, 15) ausübt, wobei
- die Vorrichtung aus zwei Ringen (30, 31) besteht, die nebeneinander koaxial auf dem mit der Aufnahme verbundenen Bauteil angeordnet sind, deren einander zugewandten Stirnflächen jeweils mindestens eine aus der Ebene der Stirnflächen herausragende Kontur (32, 33) aufweisen und mindestens eine der Konturen (32) mit einer Steigung versehen ist, auf der die mindestens eine gegenüberliegende Kontur (33) gleitet, und
- an beiden Ringen (30, 31) Mittel zur gegenseitigen radialen Verdrehung, infolge der sich jeweils ein Ring (31) axial in Richtung des Wälzlagers (4, 5, 14, 15) bewegt, und Mittel zur Arretierung des sich axial bewegenden Ringes (31) in der eingenommenen axialen Stellung vorgesehen sind, wobei als Mittel zur Verdrehung der eine Ring (30, 31) ein axial aus seiner Stirnfläche herausragendes Anschlagelement (37) und der andere Ring (31, 30) eine Ausnehmung (34) aufweist, in die das Anschlagelement (37) hineinragt, wobei die Ausnehmung (34) in Umfangrichtung des Ringes (30) erweitert ist und in diese Ausnehmung (34) ein Stellelement (36) im Wesentlichen tangential bis leicht schräg hineinragt, das gegen das Anschlagelement (37) bewegbar und arretierbar ist,
**dadurch gekennzeichnet,**
**dass** der dem Wälzlager (4, 5, 14, 15) abgewandte Ring (30) im montierten Zustand axial beweglich auf dem mit der Aufnahme verbundenen Bauteil angeordnet ist und mit seiner anderen Stirnfläche an der Aufnahme dieses Bauteils anliegt, wobei die Aufnahme für diesen Ring (30) ein Widerlager bildet.

2. Vorrichtung nach Anspruch 1,
**dadurch gekennzeichnet,**
**dass** das Widerlager, mit dem die feststehende Komponente der Wälzlager (4, 5, 14, 15) verbunden ist, durch ein Gehäuse, ein Gestell, eine Fahrzeuggabel oder einen Fahrzeugrahmen gebildet wird.

3. Vorrichtung nach Anspruch 1,
**dadurch gekennzeichnet,**
**dass** das Widerlager, mit dem die feststehende Komponente der Wälzlager (4, 5, 14, 15) verbunden ist, durch eine fest auf einer Fahrradachse (6, 16) angeordnete Endkappe (7, 8, 25, 26) gebildet wird.

4. Vorrichtung nach Anspruch 1, 2 oder 3,
**dadurch gekennzeichnet,**
**dass** der mit dem Wälzlager (4, 5, 14, 15) in Wirkverbindung stehende Ring (31) das axial aus seiner Stirnfläche herausragende Anschlagelement (37) und gegenüberliegend der mit der Aufnahme in Wirkverbindung stehende Ring (30) die Ausnehmung (34) und das Stellelement (36) aufweist.

5. Vorrichtung nach Anspruch 4,
**dadurch gekennzeichnet,**
**dass** das Anschlagelement ein Stift (37) und das Stellelement eine Stellschraube (36) ist.

6. Vorrichtung nach einem der Ansprüche 1 bis 5,
**dadurch gekennzeichnet,**
**dass** der das Stellelement aufnehmende Ring (30) aus einem Polymerwerkstoff besteht.

7. Vorrichtung nach Anspruch 5,
**dadurch gekennzeichnet,**
**dass** die Stellschraube (36) ein selbsthemmendes Gewinde aufweist.

8. Vorrichtung nach einem der Ansprüche 1 bis 7,
**dadurch gekennzeichnet,**
**dass** der mit dem Wälzlager (4, 5, 14, 15) in Wirkverbindung stehende Ring (31) an dem Innenumfang seiner an dem Wälzlager (4, 5, 14, 15) anliegenden Stirnfläche eine Innendichtung (38) und an dem Außenumfang dieser Stirnfläche eine Außendichtung (39) aufweist.

9. Vorrichtung nach Anspruch 8,
**dadurch gekennzeichnet,**
**dass** die Innendichtung (38) und die Außendichtung (39) eingelegt oder angespritzt sind.

10. Vorrichtung nach einem der Ansprüche 1 bis 9,
**dadurch gekennzeichnet,**
**dass** der mit dem Wälzlager (5, 15) in Wirkverbindung stehende Ring (31) über einen axial verschiebbaren Konus auf den Innenring des Wälzlagers (5, 15) wirkt.

11. Vorrichtung nach einem der Ansprüche 1 bis 9,
**dadurch gekennzeichnet,**
**dass** die dem Wälzlager (5, 15) zugewandte Stirnseite des Rings (31) eine Laufrille für die Kugeln des Wälzlagers (5, 15) aufweist und mit dieser an den Kugeln anliegt.

12. Anordnung einer drehbaren Lagerung eines Nabenkörpers (1, 11) eines Fahrrades auf einer Achse (6, 16) mittels zweier mit axialem Abstand zueinander in dem Nabenkörper (1, 11) angeordneter Wälzlager (4, 5, 14, 15), wobei die Achse (6, 16) in eine Gabel oder einen Rahmen des Fahrrades fest einspannbar ist und zwischen einem der beiden Wälzlager (4, 5, 14, 15) und dem ihm nächstgelegenen Schenkel der Gabel und/oder des Rahmens eine Einrichtung zur Einstellung des axialen Lagerspiels dieser Wälzlager (4, 5, 14, 15), nachfolgend Lagerspieleinstellung genannt, angeordnet ist, die einen axialen Druck auf das Wälzlager (4, 5, 14, 15) ausübt,
**dadurch gekennzeichnet,**
- **dass** die Lagerspieleinstellung (9, 27) aus zwei axial beweglichen Ringen (30, 31) besteht, die nebeneinander koaxial auf der Achse (6, 16) angeordnet sind, deren einander zugewandten Stirnflächen jeweils mindestens eine aus der Ebene der Stirnflächen herausragende Kontur (32, 33) aufweisen und mindestens eine der Konturen (32) mit einer Steigung versehen ist, auf der die mindestens eine gegenüberliegende Kontur (33) gleitet, wobei
- der eine Ring (30) mit seiner anderen Stirnfläche mit der Gabel oder dem Rahmen des Fahrrades und der andere Ring (31) mit dem Wälzlager (4, 5, 14, 15) in Wirkverbindung steht und
- an beiden Ringen (30, 31) Mittel zur gegenseitigen radialen Verdrehung, infolge derer sich jeweils ein Ring (31) axial in Richtung des Wälzlagers (4, 5, 14, 15) bewegt, und Mittel zur Arretierung des sich axial bewegenden Ringes (31) in der von diesem eingenommenen axialen Stellung vorgesehen sind.

13. Anordnung nach Anspruch 12,
**dadurch gekennzeichnet,**
**dass** als Mittel zur Verdrehung der eine Ring (31) ein axial aus seiner Stirnfläche herausragendes Anschlagelement (37) und der andere Ring (30) eine Ausnehmung (34) aufweist, in die das Anschlagelement (37) hineinragt, wobei die Ausnehmung (34) in Umfangrichtung des Ringes (30) erweitert ist und in diese Ausnehmung (34) ein Stellelement (36) im Wesentlichen tangential bis leicht schräg hineinragt, das gegen das Anschlagelement (37) bewegbar und arretierbar ist.

14. Anordnung nach Anspruch 12 oder 13,
**dadurch gekennzeichnet,**
**dass** der eine Ring (30) mit seiner anderen Stirnfläche über eine fest auf der Achse (6, 16) angeordnete Endkappe (7, 8, 25, 26) mit der Gabel oder dem Rahmen des Fahrrades in Wirkverbindung steht.

15. Anordnung nach Anspruch 12, 13 oder 14,
**dadurch gekennzeichnet,**
**dass** die Lagerspieleinstellung (9, 27) mit ihrem mit dem Wälzlager (4 5, 14, 15) in Wirkverbindung stehenden Ring (31) über einen axial verschiebbaren Konus auf den Innenring des Wälzlagers (4, 5, 14, 15) wirkt.

16. Anordnung nach einem der Ansprüche 12 bis 15,
**dadurch gekennzeichnet,**
**dass** der mit dem Wälzlager (4, 5, 14, 15) in Wirkverbindung stehende Ring (31) an dem Innenumfang seiner an dem Wälzlager (4, 5, 14, 15) anliegenden Stirnfläche eine Innendichtung (38) und an dem Außenumfang dieser Stirnfläche eine Außendichtung (39) aufweist.

## Claims

1. Device for adjusting the bearing play of components that are mounted such that they can rotate coaxially in relation to one another and that are rotatably connected to each other by two axially spaced roller bearings (4, 5, 14, 15), whereby one component is contained in a receptacle, for example a housing, frame, vehicle frame or vehicle fork and whereby the device is in operative connection with one end surface coaxially to one of the two roller bearings (5, 15) and exerts an axial pressure on one of the roller bearings (4, 5, 14, 15), whereby
- the device consists of two rings (30, 31) that are arranged coaxially next to one another on the component connected to the receptacle, the end surfaces facing towards one another of such rings each have at least one contour (32, 33) projecting out of the plane of the end surfaces and at least one of the contours (32) has a slope, on which at least one opposing contour (33) slides, and
- means for mutual radial rotation on both rings (30, 31), as a result of which one ring (31) always moves axially in the direction of the roller bearing (4, 5, 14, 15), and means for locking of the axially moving ring (31) in the occupied axial position are provided, whereby as means of rotating the one ring (30, 31) has a locking element (37) projecting axially out of the end surface of the one ring and the other ring (31, 30) has a recess (34) into which the locking element (37) projects, whereby the recess (34) is widened in the peripheral direction of the ring (30) and a positioning element (36) which can be moved and locked against the locking element (37) projects substantially tangentially to slightly obliquely into this recess (34),
**characterised in,**
**that** the ring (30) facing away from the roller bearing (4, 5, 14, 15) in the mounted condition is arranged to be axially moveable on the component connected to the receptacle and is with its other end surface adjacent to the receptacle of this component, whereby the receptacle forms an abutment for this ring (30).

2. Device in accordance with Claim 1,
**characterised in,**
**that** the abutment to which the stationary component of the roller bearing (4, 5, 14, 15) is connected is formed by a housing, a frame, a vehicle fork or a vehicle frame.

3. Device in accordance with Claim 1,
**characterised in,**
**that** the abutment to which the stationary component of the roller bearing (4, 5, 14, 15) is connected is formed by an end cap (7, 8, 25, 26) fixedly arranged on a bicycle axle (6, 16).

4. Device in accordance with Claim 1, 2 or 3,
**characterised in,**
**that** the ring (31) in operative connection to the roller bearing (4, 5, 14, 15) has the locking element (37) projecting axially from its end surface and opposingly the ring (30) in operative connection to the receptacle has the recess (34) and the positioning element (36).

5. Device in accordance with Claim 4,
**characterised in,**
**that** the locking element is a pin (37) and the positioning element is an adjusting screw (36).

6. Device in accordance with one of Claims 1 to 5,
**characterised in,**
**that** the ring (30) accepting the positioning element consists of a polymer material.

7. Device in accordance with Claim 5,
**characterised in,**
**that** the adjusting screw (36) has a self-locking thread.

8. Device in accordance with one of Claims 1 to 7,
**characterised in,**
**that** the ring (31) in operative connection to the roller bearing (4, 5, 14, 15) has an internal seal (38) at the inner circumference of its end surface adjacent to the roller bearing (4, 5, 14, 15) and has an external seal (39) at the outer circumference of this end surface.

9. Device in accordance with Claim 8,
**characterised in,**
**that** the internal seal (38) and the external seal (39) are inserted or sprayed on.

10. Device in accordance with one of Claims 1 to 9,
**characterised in,**
**that** the ring (31) in operative connection to the roller bearing (5, 15) acts on the internal ring of the roller bearing (5, 15) via an axially displaceable cone.

11. Device in accordance with one of Claims 1 to 9,
**characterised in,**
**that** the end surface of the ring (31) facing towards the roller bearing (5, 15) has a bearing groove for the balls of the roller bearing (5, 15) and with the bearing groove lies adjacent to the balls.

12. Arrangement of a rotatable bearing of a hub body (1, 11) of a bicycle on an axle (6, 16) by means of two axially spaced roller bearings (4, 5, 14, 15) in the hub body (1, 11), whereby the axle (6, 16) can be fixedly clamped into a fork or into a frame of a bicycle and a device for adjusting the axial bearing play of these roller bearings (4, 5, 14, 15), in the following referred to as bearing play adjustment, that exerts an axial pressure on the roller bearing (4, 5, 14, 15) is arranged between one of the two roller bearings (4, 5, 14, 15) and the leg of the fork and/or of the frame nearest said roller bearing,
**characterised in,**
- **that** the bearing play adjustment (9, 27) consists of two axially movable rings (30, 31) that are arranged coaxially next to one other on the axle (6, 16), the end surfaces facing towards one another of such rings each have at least one contour (32, 33) projecting out of the plane of the end surfaces and at least one of the contours (32) has a slope, on which at least one opposing contour (33) slides, whereby
- one ring (30) is, with its other end surface, in operative connection to the fork or the frame of the bicycle and the other ring (31) is in operative connection to the roller bearing (4, 5, 14, 15) and
- means for mutual radial rotation are provided on both rings (30, 31), as a result of which in each case one ring (31) moves axially in the direction of the roller bearing (4, 5, 14, 15), and means are provided for locking the axially moving ring (31) in the axial position it occupies.

13. Arrangement in accordance with Claim 12
**characterised in,**
**that** as means for rotating the one ring (31) has a locking element (37) projecting axially from its end surface and the other ring (30) has a recess (34), into which the locking element (37) projects, whereby the recess (34) is widened in the peripheral direction of the ring (30) and a positioning element (36) that can be moved and locked against this locking element (37) projects largely tangentially to slightly obliquely into this recess (34).

14. Arrangement in accordance with Claim 12 or 13,
**characterised in,**
**that** the one ring (30) is, with its other end surface, in operative connection to the fork or the frame of the bicycle via an end cap (7, 8, 25, 26) arranged fixedly on the axle (6, 16).

15. Arrangement in accordance with Claim 12, 13 or 14,
**characterised in,**
**that** the bearing play adjustment (9, 27) with its ring (31) in operative connection to the roller bearing (4, 5, 14, 15) acts on the internal ring of the roller bearing (4, 5, 14, 15) via an axially displaceable cone.

16. Arrangement in accordance with one of Claims 12 to 15,
**characterised in,**
**that** the ring (31) in operative connection to the roller bearing (4, 5, 14, 15) has an internal seal (38) at the inner circumference of its end surface adjacent to the roller bearing (4, 5, 14, 15) and has an external seal (39) at the outer circumference of this end surface.

## Revendications

1. Dispositif pour le réglage du jeu des paliers de pièces montées coaxialement autour d'un axe de rotation les unes par rapport aux autres, lesquelles sont solidarisées de manière pivotante au moyen de deux paliers à roulements (4, 5, 14, 15) disposés avec une certaine distance axiale l'un par rapport à l'autre, une pièce étant reprise par un logement, par exemple, un boîtier, un bâti, un châssis de véhicule ou une fourche de véhicule et le dispositif étant, avec une face frontale, en liaison active coaxialement avec l'un des deux paliers à roulements (5, 15) et exerçant une pression axiale sur l'un des paliers à roulements (4, 5, 14, 15),
- le dispositif se composant de deux anneaux (30, 31) qui sont juxtaposés coaxialement sur la pièce reliée au logement, dont chacune des faces frontales tournées l'une vers l'autre présente au moins un contour dépassant du niveau des faces frontales (32, 33) et au moins l'un des contours (32) étant pourvu d'une inclinaison sur laquelle glisse au moins un contour opposé (33) et
- des moyens pour une torsion radiale mutuelle à la suite de laquelle chacun des anneaux (31) se déplace axialement en direction du palier à roulements (4, 5, 14, 15) étant prévus sur les deux anneaux (30, 31) et des moyens pour le blocage de l'anneau (31) se déplaçant axialement étant prévus dans la position axiale adoptée, avec, comme moyens pour la torsion, un anneau (30, 31) présentant un élément de butée (37) dépassant axialement de sa face frontale et l'autre anneau (31, 30) présentant une cavité (34), dans laquelle l'élément de butée (37) est en saillie, la cavité (34) étant étendue dans le sens circonférentiel de l'anneau (30) et un élément de réglage (36) mobile et blocable contre l'élément de butée (37), étant en saillie essentiellement de façon tangentielle à légèrement inclinée dans la cavité (34),
**caractérisé en ce que**,
l'anneau (30) tourné vers le palier à roulements (4, 5, 14, 15) est disposé de façon axialement mobile sur la pièce reliée au logement à l'état monté et est adjacent, avec son autre face frontale, au logement de cette pièce, le logement pour cet anneau (30) formant une butée.

2. Dispositif conformément à la revendication n °1,
**caractérisé en ce que**
la butée avec laquelle la pièce fixe des paliers à roulements (4, 5, 14, 15) est reliée, est formée par un boîtier, un bâti, une fourche de véhicule ou un châssis de véhicule.

3. Dispositif conformément à la revendication n °1,
**caractérisé en ce que**
la butée avec laquelle la pièce fixe des paliers à roulements (4, 5, 14, 15) est reliée, est formée par un embout (7, 8, 25, 26) disposé de manière fixe sur un axe de bicyclette (6, 16).

4. Dispositif conformément à la revendication n°1, n°2 ou n°3
**caractérisé en ce que**
l'anneau (31) en liaison active avec le palier à roulements (4, 5, 14, 15) présente l'élément de butée (37) dépassant axialement de sa face frontale et, à l'opposé, l'anneau (30) en liaison active avec le logement présente la cavité (34) et l'élément de réglage (36).

5. Dispositif conformément à la revendication n°4,
**caractérisé en ce que**
l'élément de butée est une goupille (37) et l'élément de réglage une vis de réglage (36).

6. Dispositif conformément à la revendication n°1 à n°5,
**caractérisé en ce que**
l'anneau (30) contenant l'élément de réglage se compose de matériau polymère.

7. Dispositif conformément à la revendication n°5,
**caractérisé en ce que**
la vis de réglage (36) présente un filetage autobloquant.

8. Dispositif conformément à l'une des revendications n°1 à n°7,
**caractérisé en ce que**
l'anneau (31) en liaison active avec le palier à roulements (4, 5, 14, 15) présente, sur la circonférence intérieure de sa face frontale adjacente au palier à roulements (4, 5, 14, 15), un joint intérieur (38) et, sur la circonférence extérieure de cette face frontale, un joint extérieur (39).

9. Dispositif conformément à la revendication n°8,
**caractérisé en ce que**
le joint intérieur (38) et le joint extérieur (39) sont insérés ou injectés.

10. Dispositif conformément à l'une des revendications n°1 à n°9,
**caractérisé en ce que**
l'anneau (31) en liaison active avec le palier à roulements (5, 15) agit sur l'anneau intérieur du palier à roulements (5, 15) par un cône déplaçable axialement.

11. Dispositif conformément à l'une des revendications n°1 à n°9,
**caractérisé en ce que**
la face frontale de l'anneau (31), tournée vers le palier à roulements (5, 15), présente une gorge de roulement pour les billes du palier à roulements (5, 15) et est adjacente à ces billes avec cette gorge de roulement.

12. Disposition d'un support en rotation d'un corps de moyeu (1, 11) d'une bicyclette sur un axe (6, 16) au moyen de deux paliers à roulements (4, 5, 14, 15) disposés dans le corps de moyeu (1, 11) avec une certaine distance axiale l'un par rapport à l'autre, l'axe (6, 16) étant fermement serrable dans une fourche ou un cadre de bicyclette et un dispositif pour le réglage du jeu axial de ces paliers à roulements (4, 5, 14, 15), ci-après appelé réglage du jeu des paliers, exerçant une pression axiale sur le palier à roulements (4, 5, 14, 15), étant disposé entre l'un des deux paliers à roulements (4, 5, 14, 15) et le montant de la fourche et/ou du cadre le plus proche de ce dernier,
**caractérisée en ce que**,
- le réglage du jeu des paliers (9, 27) se compose de deux anneaux (30, 31) axialement mobiles, qui sont juxtaposés coaxialement sur l'axe (6, 16), dont chacune des faces frontales tournées l'une vers l'autre présente au moins un contour (32, 33) dépassant du niveau des faces frontales et au moins l'un des contours (32) étant pourvu d'une inclinaison sur laquelle glisse au moins un contour (33) opposé,
- un anneau (30) est, avec son autre face frontale, en liaison active avec la fourche ou le cadre de la bicyclette et l'autre anneau (31) avec le palier à roulements (4, 5, 14, 15) et
- des moyens pour une torsion radiale mutuelle à la suite de laquelle chacun des anneaux (31) se déplace axialement en direction du palier à roulements (4, 5, 14, 15) sont prévus sur les deux anneaux (30, 31) et des moyens pour le blocage de l'anneau (31) se déplaçant axialement sont prévus dans la position axiale adoptée par ce dernier.

13. Disposition conformément à la revendication n °12,
**caractérisée en ce que**,
comme moyens pour la torsion, un anneau (31) présente un élément de butée (37) dépassant axialement de sa face frontale et l'autre anneau (30) présente une cavité (34), dans laquelle l'élément de butée (37) est en saillie, la cavité (34) étant étendue dans le sens circonférentiel de l'anneau (30) et un élément de réglage (36) mobile et blocable contre l'élément de butée (37), étant en saillie essentiellement de façon tangentielle à légèrement inclinée dans cette cavité (34).

14. Disposition conformément à la revendication n °12 ou n °13,
**caractérisée en ce que**
un anneau (30) est, avec son autre face frontale, en liaison active avec la fourche ou le cadre de la bicyclette par un embout (7, 8, 25, 26) disposé de façon fixe sur l'axe (6, 16).

15. Disposition conformément à la revendication n °12, n °13 ou n °14,
**caractérisée en ce que**
le réglage du jeu des paliers (9, 27) agit, avec son anneau (31) en liaison active avec le palier à roulements (4 5, 14, 15), sur l'anneau intérieur du palier à roulements (4, 5, 14, 15) par un cône déplaçable axialement.

16. Disposition conformément à l'une des revendications n°12 à n°15,
**caractérisée en ce que**
l'anneau (31) en liaison active avec le palier à roulements (4, 5, 14, 15) présente, sur la circonférence intérieure de sa face frontale adjacente au palier à roulements (4, 5, 14, 15), un joint intérieur (38) et, sur la circonférence extérieure de cette face frontale, un joint extérieur (39).
